# EUROPEAN PATENT SPECIFICATION

(11) **EP 1 317 123 B1**
(45) Date of publication and mention of the grant of the patent: **11.01.2006**
(21) Application number: 02394110.7
(22) Date of filing: 03.12.2002
(51) Int. Cl.: H04M 3/56, H04N 7/15, H04L 29/06

(54) **A multi-site teleconferencing system**
Örtlich verteiltes Telekonferenzsystem
Système de téléconference multi-site

(30) Priority: 03.12.2001 EP 01650144
(43) Date of publication of application: 04.06.2003
(73) Proprietor: Spectel Research Limited, County Dublin (IE)
(72) Inventor: Seavers, David, Goatstown, Dublin 14 (IE); Walsh, Bruce, Londonderry, New Hampshire (US); Taggart, James, Andover MA (US); Moloney, Roger, Leopardstown, Dublin 18 (IE); Maguire, Hugh, Leopardstown, Dublin 18 (IE); McCarthy, Dave, Stillorgan, County Dublin (IE); Troy, Eamon, Wicklow Town, County Wicklow (IE)
(74) Representative: Weldon, Michael James

(56) References cited:
- EP-A- 0 847 178
- EP-A- 0 883 306
- US-A- 5 995 608
- BLUM C ET AL: "A DEVELOPMENT AND RUNTIME PLATFORM FOR TELECONFERENCING APPLICATIONS" IEEE JOURNAL ON SELECTED AREAS IN COMMUNICATIONS, IEEE INC. NEW YORK, US, vol. 15, no. 3, 1 April 1997 (1997-04-01), pages 576-588, XP000683949 ISSN: 0733-8716
- WILLEBEEK-LEMAIR M H ET AL: "Distributed video conferencing systems" COMPUTER COMMUNICATIONS, ELSEVIER SCIENCE PUBLISHERS BV, AMSTERDAM, NL, vol. 20, no. 3, 1 May 1997 (1997-05-01), pages 157-168, XP004081675 ISSN: 0140-3664

## Description

### INTRODUCTION

### Field of the Invention

The invention relates to teleconferencing systems.

### Prior Art Discussion

Teleconferencing systems have been available for many years. Typically a system comprises a telephone line switching or routing unit, called a "bridge". There is also typically an agent console for scheduling calls and handling other administrative functions. Conferees both local and remote can take part in a conference by dialling into the designated number and entering a required security code.

The arrangement has worked well in many circumstances. One example is a system based on a bridge marked by Spectel-Multilink under the name "C7000™". However in some circumstances the prior systems impose unsatisfactory limitations because of their limited capacity. For example, a particular multi-national business may have a situation where systems located in Europe are under-utilised during a day when its systems in USA are unable to cope with demand.

US5995608 for example, describes an on-demand teleconferencing system having a bridge server. Blum et al "A development and runtime platform for teleconferencing applications" IEEE Joumal on Selected Areas in Communication, IEEE Inc. New York, US Vol 15 no. 3 April 1, 1997, pp576-588 describes peer to peer communication between partner systems.

The invention is therefore directed towards providing for more efficient use of teleconferencing equipment and greater flexibility to meet demand at peak times at each of a number of remote locations.

### SUMMARY OF THE INVENTION

According to the invention, there is provided a teleconferencing system as set out in claim 1.

In one embodiment, the bridge comprises means for establishing the link as a link line in a telecommunications voice network.

In one embodiment, the multi-site engine comprises means for communicating with the remote multi-site engine using a packet protocol.

In one embodiment, the packet protocol is TCP/IP.

In another embodiment, the system further comprises a local engine associated with the bridge and residing between the bridge and the multi-site engine.

In one embodiment, the system comprises a plurality of bridges, and a local engine associated with each bridge.

In a further embodiment, the multi-site engine comprises means for transmitting control signals in an asynchronous event-driven manner and for receiving such control signals from a remote multi-site engine.

In one embodiment, the system comprises means for categorising each event with an event type, and the multi-site engine comprises means for updating a configuration file and for deciding on onward routing of a signal to the local engine according to event type of the control signal.

In one embodiment, the multi-site engine comprises means for polling a multi-site engine of a remote system if a time period elapses without an asynchronous event.

In one embodiment, the agent console comprises means for writing a global flag to a bridge database to indicate scheduling of a multi-site conference, and the system comprises a bridge status function comprising means for automatically transmitting a control signal to a multi-site engine of a remote system requesting establishment of a link line between bridges of the systems.

In another embodiment, each database comprises means for initiating events before and after a conference for synchronisation with a bridge database of a remote system participating in a conference.

In one embodiment, the system comprises a local engine layer, a multi-site engine layer, and the bridge layer each layer comprising:-
a status communication object comprising means for listening for status change events,
a status container comprising means for maintaining lists of state objects defining status of the conference, and
a policy object comprising means for assisting with creation and destruction of other objects in the system.

In one embodiment, the status container comprises means for associating a sequence number with each state.

According to another aspect of the invention there is provided a method of teleconferencing between conferees at a plurality of remote conferee location through a teleconferencing system comprising a teleconferencing bridge for handling communication lines and having a bridge database and a multi-site engine, the method comprising the steps of
an agent console interfacing with the bridge and the bridge database to schedule conferences;
the multi-site engine communicating with a multi-site engine of a remote teleconferencing system to transfer control signals in real time for simultaneous operation of at least two teleconferencing systems to handle a single conference;
the bridge establishing a link with a bridge of a remote teleconferencing system for operation of the bridges in synchronism so that all teleconferencing systems operate as one logical system.

### DETAILED DESCRIPTION OF THE INVENTION

### Brief Description of the Drawings

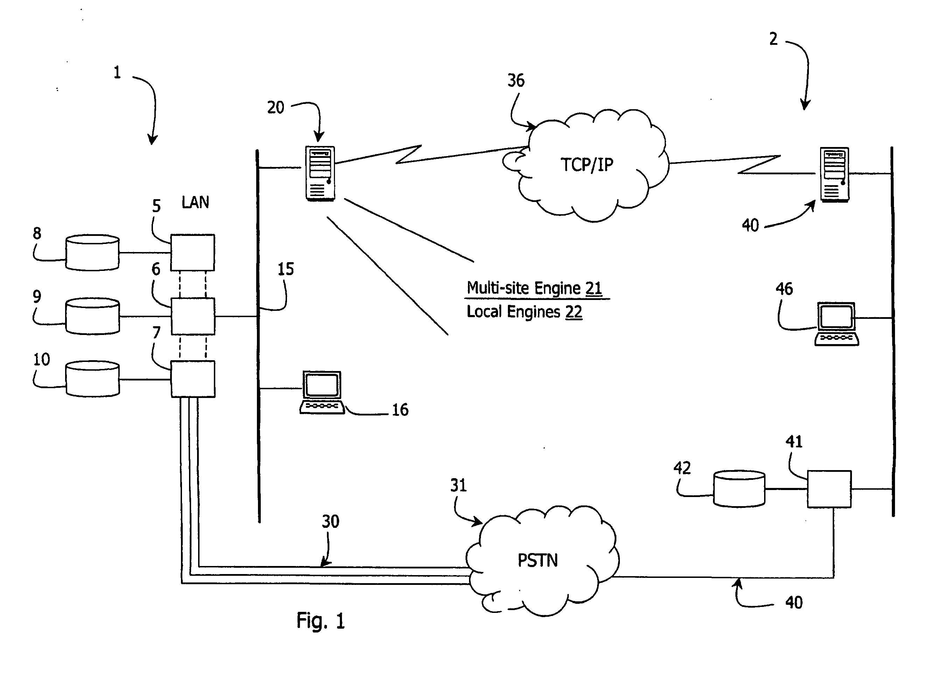

The invention will be more clearly understood from the following description of some embodiments thereof, given by way of example only with reference to the accompanying drawings in which:-
Fig. 1 is a diagram illustrating the architecture of two teleconferencing systems of the invention.

Referring to Fig. 1 two teleconferencing systems 1 and 2 are illustrated. Each system 1 and 2 may be referred to as a multi-site teleconferencing system because it is capable of linking with another system at a remote location so that resources are effectively pooled and are configured dynamically in a versatile manner to meet demand.

The system 1 comprises three bridges 5, 6, and 7, each linked with an associated database 8, 9, and 10 respectively. The bridges 5, 6, and 7 are connected to an10/100 Ethernet™ LAN 15. An agent console 16 is also connected to the LAN 15. Finally, the system 1 also comprises a server 20 having a multi-site engine 21 and three local engines 22, each associated with one of the bridges 5, 6, and 7.

The bridges 5, 6, and 7 are connected by cabling 30 to a PSTN 31. The server 20 is configured for TCP/IP communication via a network 36.

The system 2 has the same general configuration as the system 1, however, in this case there is only one bridge. A server 40 has a multi-site engine, and a single local engine associated with the bridge 41, having a database 42. The bridge 41 is linked to the PSTN 31 by cabling 45. Finally, the system 2 comprises an agent console 46.

These two systems are given by way of example only. In general, a system of the invention may have any number of bridges, a local engine associated with each bridge, and a single multi-site engine. The engines may be hosted on any suitable number of hardware computers depending on required processing capacity.

It will be noted from the above that there are two forms of inter-system communication, namely:
(a) the PSTN 31 for bridge-to-bridge communication during a conference, and
(b) the TCP/IP network 36 (typically the Internet) for real time control signalling between the multi-site engines.

To set up a conference, the agent consoles 16 and 46 are used to interface with the bridges and their databases to schedule the conference. The scheduling allocates an appropriate number of conferences to each system 1 and 2 according to their capacities. Scheduling may require only one system for a conference, in which case the conference process in an conventional manner.

However, if a "Global" command is inputted at a console 16 or 46, a flag is written to a bridge database. This flag indicates that there must be synchronisation between all of the databases for the two (or more) systems involved. The multi-site engine (MSE) of the first system transmits a TCP/IP command to the MSE of the other system. In response, each local engine of the other system instructs its bridge to open a line via the PSTN 31 with the bridges of the first system. Henceforth, this link line is used to maintain communications between the systems 1 and 2 for conference call voice traffic.

Once the conference commences the local engine and the MSEs perform real time control signalling to ensure that all participating sites are synchronised to operate as one logical system.

Synchronisation is both asynchronously event driven, and also synchronously maintained by polling. For the former, any event which arises such an as input by a conferee of a query DMF tone causes the relevant bridge to inform its local engine, which in turn informs its MSE. The MSE in turn transmits via TCP/IP the event to the remote MSE, which informs the local engine, which informs its bridge. These signals are used by the MSEs to update the associated configuration files. The update signals are generated in real time, and so the configuration files are maintained in synchronisation. There are different event types. Some types require the update signal to go no further than the receiving MSE, others require it to go as far as the remote local engine, while others require it to go as far as the remote bridges.

The synchronous events arise after expiry of a time period in which no asynchronous events arise. Upon expiry, one of the MSEs automatically polls the other MSE, to determine status and update its configuration file with this status.

All of the control signalling passes between the MSEs, and it is all transmitted over TCP/IP. The packet sizes are maintained as small as possible to minimise bandwidth requirements.

Also, during the conference each bridge captures call detail data to its database. At the end of the conference, each bridge transmits call detail records (CDRs) to the other bridges so that any one database has all CDRs for the conference and the databases are in complete synchronism. Thus, any one bridge can be used for generation of the necessary billing and other reports.

In more detail a schedule function of a console supports scheduling on multiple systems and provides the agent with the ability to schedule a conference on a single bridge or on multiple bridges. The schedule function makes calls to a schedule interface to create, modify and delete conferences. There is a global conference ID - a unique and key field that references the conferences that are to take place on multiple and geographically dispersed bridges. The schedule function ensures that the global conference ID is unique on all the bridges that are part of a scheduled conference. It also ensures that the same participant's security code can be used on each bridge and that this security code is unique for the given date/time on all the bridges that are part of the conference. This requirement also holds for a moderator security code.

The scheduling is not relevant on a single point of failure or a component with too much overall system reliance. This allows end users and agents to schedule global conferences without changing the scheduling infrastructure for scheduling local conferences. This has been achieved by virtue of the distributed schedule databases 8,9,10, and 42 connected to the bridges.

The schedule function globally aggregates the interfaces to each bridge database. Each schedule interface uses a reserve/commit technique to schedule a global conference across all nodes on the site(s). This reserve/commit is important such that if the reservation has a conflict due to not enough ports, or code conflict on any one bridge, the schedule as a whole comes back with the appropriate notification. Only when the conference can be reserved across of all the bridges, is the reservation committed and actually scheduled.

Each MSE uses a configuration file and this file is common to all of the systems. The MSE assumes that the configuration file on each system lists all the bridges for the system in the order of importance of each bridge. The configuration file also lists the IP address, UDP port to connect through, and the telephone number for each bridge. The MSE uses the order of importance to determine the least expensive links between the various bridges for least cost routing. The MSE uses this information to set up the links, once a multi-bridge conference starts up.

A Global Conference is controlled by a system 1 or 2 with a Master Conference Status for the conference. This controlling system decides how link lines are established, how distributed conference commands (such as secure and lecture) are handled, and when the conference should be hung up. Each Global Conference has a Master Conference Status record.

The servers 20 and 40 are organised into three "layers":
- a bridge status layer,
- the multi-site engine layer, and
- the local engine layer.

Each layer is divided into three major objects:
- a status communication object,
- a status container, and
- a policy object.
   In general, the status communication object listens for status change events and communicates these changes to other layers and may update the status container information.
   The status container contains lists of state objects that encapsulate the current state of activities of interest in the system. It also fires status-changed events to notify other objects that some state has changed. Every state object has a sequence number in it. Whenever a state object is changed, its sequence number is also incremented. When a status change message is acknowledged by a receiving object in another part of the system or a different system, the sequence number of the object sent is included in the message, so that delivery is known.
   The policy object makes decisions and assists in the creation and destruction of other objects in the system.

### Bridge Status Layer

The bridge layer is responsible for establishing and maintaining communication with other systems, and keeping track of which system has the Global Conference Status record for each Global Conference currently active. It is essentially at a higher level than the MSE.

### Initialisation

When the bridge layer starts up, a BridgePolicy object reads the local configuration file and loads all of the static bridge information into a BridgeStatusContainer object. It also initialises a MasterConferenceContainer, where it will hold master conference records. It then prepares a BridgeStatus object for itself and causes it to send a BridgeStatusChanged event to the BridgeStatusCommunication object.

The BridgeStatusCommunication object tries to determine who its "nearest" active neighbours are by attempting to open a TCP/IP socket with them, using the information in the BridgeStatusContainer. Once it establishes communication, it sends the BridgeStatus information over to them.

The receiving BridgeStatusCommunication objects on the other systems first attempt to update the information for that system in the BridgeStatusContainer. Since the bridge is first coming up, the receiving bridge passes the BridgeStatus on to its neighbours, so eventually every active bridge in the system will know that the new bridge is available. Furthermore, the receiving bridge sends all the information it has about active bridges and all of its MasterConference records back to the original bridge. A MasterConference record contains the GlobalConferenceID, and the IP Address of the bridge that is the conference master for this global conference.

If a new Global Conference starts on a system, the LocalStatusPolicy calls BridgePolicy:*NewGlobalConference*. The BridgePolicy looks in the MasterConferenceContainer. If it finds a matching GlobalConferenceID, then the conference already exists and has a Global Conference Master. If it does not find it, then it assumes this is a totally new Global Conference. It creates a new MasterConference record and adds it to the container (which triggers an event that will cause this MasterConference record to be passed around the system so that all bridges hear about it).

It also creates a new GlobalConferenceStatus record and adds it to the GlobalConferenceStatus container.

Using a timer, the BridgePolicy object increments the sequence number in its local BridgeStatus object. This triggers a BridgeStatusChanged event that is received by the system's "neighbours." If a system does not hear from a neighbour for an extended period of time, it decides that either it or the neighbour is no longer communicating. It deletes its known neighbour information and redoes the process of determining who its neighbours are.

### Local Layer

The Local Layer is responsible for establishing and maintaining communication with an associated local bridge, controlling the bridge on advice from the global layer, and keeping track of a Local Conference Status record for each Global Conference currently active.

When the local layer starts up, a LocalPolicy logs into the BridgeInterface, to establish communication with the associated bridge. It then sends a *GetConferenceStatus* command to the BridgeInterface, with a GlobalConferenceID of 0. This causes the BridgeInterface to send ConferenceStatusChanged records for each GlobalConferenceID (via the ConferenceStatusChanged listener).

This provides a list of all global conferences active on the bridge to the LocalPolicy. It then issues a *GetStaticConferenceInfo* request for each global conference. The BridgeInterface returns a StaticConferenceInfo record (GlobalConferenceID, conference name, moderator security code, and whether the conference must wait for a moderator). With that data, the LocalPolicy builds a LocalConferenceStatus record. It calls BridgePolicy.*NewGlobalConference* (see the Bridge Layer/New Global Confernce section). The LocalPolicy then adds the LocalConferenceStatus record to the LocalConferenceStatusContainer.

Changing the LocalConferenceStatusContainer triggers a LocalConferenceStatusChanged event that wakes up the LocalStatusComm object. It queries the Bridge layer for the IP address of the Conference Master for this Global Conference, and sends the LocalConferenceStatus record to the Global Layer.

When a call comes into the bridge that starts a new Global Conference, the BridgeInterface sends a ConferenceStatusChanged record to the listener, the LocalPolicy. The behaviour of the system from there is the same as for initialisation. The LocalPolicy issues a *GetStaticConferenceInfo* request for this conference. It builds a LocalConferenceStatus record and calls BridgePolicy.*NewGlobalConference* (see the Bridge Layer/New Global Confemce section). The LocalPolicy then adds the LocalConferenceStatus record to the LocalConferenceStatusContainer.

If an event occurs that causes a Global Conference on the bridge to change, the BridgeInterface fires a ConferencStatusChanged record. This change might be an attendee or a moderator arriving or leaving, a link line arriving or leaving, or the lecture or secure state of the conference changing. In any case, the LocalPolicy simply updates the LocalConferenceStatusContainer, and the LocalStatusComm object subsequently informs the GlobalStatus layer of the change.

### Global Layer

The Global Layer is responsible for maintaining the state of Global Conferences, and managing them. In some ways, it has the least to do, but it also is the most important.

The BridgePolicy, as a part of its NewGlobalConference method creates a new GlobalConferenceStatus record and adds it to the GlobalConferenceStatus container. Again there is nothing further to do. A GlobalConferenceStatus record contains information about the global state of the conference and a set of LocalConferenceStatus segments that reflect the current state of each LocalConference associated with it.

Eventually, the LocalStatusComm object sends a LocalConferenceStatus record to the Global Layer. The GlobalStatusComm object reads the information and updates the GlobalConferenceStatus record, adding the LocalConference segment for this bridge. The GlobalPolicy listener is notified by this change, but has to take no action. That state remains true until a second bridge joins the conference

When another bridge joins the conference, the GlobalStatusComm object acts as it did for the first bridge. The GlobalPolicy listener, on the other hand, now has to take some action. GlobalPolicy calls *ParseStatusChangeEvent,* and then, if some change in the global conference state is required, sends commands to the appropriate bridges to effect those changes. Possible changes are: add link line, remove link line, hang up the conference, and secure or lecture the conference.

Since systems communicate with each other using TCP/IP, a scheme is laid over that to ensure reliability. The base object for the communication objects (SsStatusComm) establishes a model that is followed by (most of) the communication objects. The state of the objects being sent is synchronised through the use of sequence numbers.

Every object that can be associated with an event has a sequence number. Whenever the system changes the object it bumps the sequence number. The change triggers a StatusChanged event, and SsStatusComm is a status changed listener. The event gets queued in the ChangedEventQueue. An event refers to a single object. When an event occurs to an object, the object's current sequence number is stored in the event.

A secondary thread handles message sending. The thread removes objects from the ChangedEventQueue, but does nothing with them if the event sequence number does not match the object sequence number (if multiple events occur to the same object, only the last event gets processed). If the sequence number matches, then the event needs to be sent. Every message has a sequence number also. When it sends the message, it writes the sequence number of the message and a timestamp in the event object and (if the event Resend Boolean is true) add the event to the ResendEventQueue. There is no need to queue messages. When the message is acknowledged, it runs through the ResendEventQueue looking for events that have the matching message sequence number, and removes the event from the queue. If the event is in the ResendEventQueue longer that the resend threshold, it gets moved back to the ChangedEventQueue (by putting it back in the ChangedEventQueue, it will only get resent if it is appropriate. If the object has changed in the interim, then the requeued event would be ignored.

### Bridge-dependent Engine API

Functions required in this API: All bridges that are part of the system must support all of the functions in this API.

### Status

- GetConferenceStatus(GlobalConferenceID)
   Query the state of global conferences given Global Conference ID. Response includes the following:
   - Global Conference ID (key)
   - Conference schedule information
      - Moderator hang-up flag (conference is hung up when last moderator exits)
   - Conference State Information
      - Lecture
      - Secure
   - Current resources used
      - Number of user lines
      - Number of moderator lines
      - Active Link Lines: LinkA and LinkB (2 links per conference per bridge, maximum)
         - Bridge ID, GlobalConferenceID, ModeratorSecurityCode, LineID
- GetStaticConferenceInfo(GlobalConferenceID)
   Query the static information of global conferences given Global Conference ID. Response includes the following:
   - Global Conference ID (key)
   - Static conference information:
      - Conference name
      - Conference Moderator Pass Code (required for linking)
      - Moderator Start flag (participants hear music until first moderator joins)
- AddConferenceStatusChangedListener()
   Listen for conference state changed events
- RemoveConferenceStatusChangedListener()
   Stop listening for conference state changed events
- FireConferenceStatusChanged(event)
   Send notification of status change to a Global Conference. Data is the same as the response to GetConferenceStatus message

### Commands

- AddLink(bridgerID, securityCode, startingLine, Phone)
   Access a line (starting with startingLine), dial the phone number of the other bridge. When it answers, play the VLL queue and the securityCode. Mark the line as a VLL and as a moderator.
- HangupLink(LineID)
   Hang-up Link line - given Line ID
- Hangup(GlobalConferenceID)
   Hang-up Conference - Given Global Conference ID
- SecureConference(GlobalConferenceID)
   Set Conference Secure
- LectureConference(GlobalConferenceID)
   Set Conference Lecture

The invention is not limited to the embodiments described but may be varied in construction and detail.

## Claims

1. A teleconferencing system comprising:
a teleconferencing bridge for handling communication lines for at least one conference involving conferees at a plurality of remote conferee locations;
a bridge database;
an agent console for interfacing with the bridge and the bridge database to schedule conferences, wherein
the system further comprises a multi-site engine for communication with a multi-site engine of a remote teleconferencing system for transfer of control signals in real time for simultaneous operation of at least two teleconferencing systems to handle a single conference;
means in the bridge for establishing a link with a bridge of a remote teleconferencing system for operation of the bridges in synchronism so that the teleconferencing systems operate as one logical system.

2. A teleconferencing system as claimed in claim 1, wherein the bridge comprises means for establishing the link as a link line in a telecommunications voice network.

3. A teleconferencing system as claimed in claims 1 or 2, wherein the multi-site engine comprises means for communicating with the remote multi-site engine using a packet protocol.

4. A teleconferencing system as claimed in claim 3, wherein the packet protocol is TCP/IP.

5. A teleconferencing system as claimed in any preceding claim, further comprising a local engine associated with the bridge and residing between the bridge and the multi-site engine.

6. A teleconferencing system as claimed in claim 5, wherein the system comprises a plurality of bridges, and a local engine associated with each bridge.

7. A teleconferencing system as claimed in any preceding claim, wherein the multi-site engine comprises means for transmitting control signals in an asynchronous event-driven manner and for receiving such control signals from a remote multi-site engine.

8. A teleconferencing system as claimed in claim 7, wherein the system comprises means for categorising each event with an event type, and the multi-site engine comprises means for updating a configuration file and for deciding on onward routing of a signal to the local engine according to event type of the control signal.

9. A teleconferencing system as claimed in any preceding claim, wherein the multi-site engine comprises means for polling a multi-site engine of a remote system if a time period elapses without an asynchronous event.

10. A teleconferencing system as claimed in any preceding claim, wherein the agent console comprises means for writing a global flag to a bridge database to indicate scheduling of a multi-site conference, and the system comprises a bridge status function comprising means for automatically transmitting a control signal to a multi-site engine of a remote system requesting establishment of a link line between bridges of the systems.

11. A teleconferencing system as claimed in claim 10, wherein each database comprises means for initiating events before and after a conference for synchronisation with a bridge database of a remote system participating in a conference.

12. A teleconferencing system as claimed in claim 11, comprising a local engine layer, a multi-site engine layer, and a bridge layer, each layer comprising:-
a status communication object comprising means for listening for status change events,
a status container comprising means for maintaining lists of state objects defining status of the conference, and
a policy object comprising means for assisting with creation and destruction of other objects in the system.

13. A teleconferencing system as claimed in claim 12, wherein the status container comprises means for associating a sequence number with each state.

14. A method of teleconferencing between conferees at a plurality of remote conferee locations through a teleconferencing system comprising a teleconferencing bridge for handling communication lines and having a bridge database and a multi-site engine, the method comprising the steps of
an agent console interfacing with the bridge and the bridge database to schedule conferences;
the multi-site engine communicating with a multi-site engine of a remote teleconferencing system to transfer control signals in real time for simultaneous operation of at least two teleconferencing systems to handle a single conference;
the bridge establishing a link with a bridge of a remote teleconferencing system for operation of the bridges in synchronism so that all teleconferencing systems operate as one logical system.

15. A computer program comprising computer program code means adapted to perform all steps of the method of claim 14 when said program is run on a computer.

16. A computer program as claimed in claim 15 embodied on a computer readable medium.

## Patentansprüche

1. Telekonferenzsystem, das Folgendes umfasst:
eine Telekonferenzbrücke zum Handhaben von Kommunikationsleitungen für wenigstens eine Konferenz, die Konferenzteilnehmer an einer Mehrzahl von fernen Konferenzteilnehmerorten beinhaltet;
eine Brückendatenbank;
eine Agentkonsole als Schnittstelle mit der Brücke und der Brückendatenbank zum Planen von Konferenzen, wobei
das System ferner eine Multi-site-Engine zur Kommunikation mit einer Multi-site-Engine eines fernen Telekonferenzsystems für die Übertragung von Steuersignalen in Echtzeit für einen gleichzeitigen Betrieb von wenigstens zwei Telekonferenzsystemen zur Handhabung einer einzelnen Konferenz umfasst;
Mittel in der Brücke zum Herstellen einer Verbindung mit einer Brücke eines fernen Telekonferenzsystems für einen synchronen Betrieb der Brücken, so dass die Telekonferenzsysteme als ein logisches System arbeiten.

2. Telekonferenzsystem nach Anspruch 1, bei dem die Brücke Mittel zum Herstellen der Verbindung als Linkleitung in einem Telekommunikationssprechnetz umfasst.

3. Telekonferenzsystem nach Anspruch 1 oder 2, wobei die Multi-site-Engine Mittel zum Kommunizieren mit der fernen Multi-site-Engine mit einem Paketprotokoll umfasst.

4. Telekonferenzsystem nach Anspruch 3, wobei das Paketprotokoll TCP/IP ist.

5. Telekonferenzsystem nach einem der vorherigen Ansprüche, ferner umfassend eine lokale Maschine, die mit der Brücke assoziiert ist und sich zwischen der Brücke und der Multi-site-Engine befindet.

6. Telekonferenzsystem nach Anspruch 5, wobei das System eine Mehrzahl von Brücken und eine lokale Maschine umfasst, die mit jeder Brücke assoziiert ist.

7. Telekonferenzsystem nach einem der vorherigen Ansprüche, wobei die Multi-site-Engine Mittel zum Übertragen von Steuersignalen auf eine asynchrone eventgesteuerte Weise und zum Empfangen solcher Steuersignale von einer fernen Multi-site-Engine umfasst.

8. Telekonferenzsystem nach Anspruch 7, wobei das System Mittel zum Kategorisieren jedes Events mit einem Eventtyp und die Multi-site-Engine Mittel zum Aktualisieren einer Konfigurationsdatei und zum Fällen einer Entscheidung über eine Weiterleitung eines Signals zu der lokalen Maschine je nach dem Eventtyp des Steuersignals umfasst.

9. Telekonferenzsystem nach einem der vorherigen Ansprüche, wobei die Multi-site-Engine Mittel zum Abfragen einer Multi-site-Engine eines Femsystems umfasst, wenn eine Zeitperiode ohne asynchrones Event verstreicht.

10. Telekonferenzsystem nach einem der vorherigen Ansprüche, wobei die Agentkonsole Mittel zum Schreiben eines globalen Flag auf eine Brückendatenbank umfasst, um die Planung einer örtlich verteilten Konferenz anzuzeigen, und wobei das System eine Brückenstatusfunktion umfasst, die Mittel zum automatischen Übertragen eines Steuersignals zu einer Multi-site-Engine eines Femsystems umfasst, das die Herstellung einer Linkleitung zwischen Brücken der Systeme anfordert.

11. Telekonferenzsystem nach Anspruch 10, wobei jede Datenbank Mittel zum Einleiten von Events vor und nach einer Konferenz zur Synchronisation mit einer Brückendatenbank eines an einer Konferenz teilnehmenden Femsystems umfasst.

12. Telekonferenzsystem nach Anspruch 11, umfassend eine Local-Engine-Layer, eine Multi-site-Engine-Layer und eine Bridge-Layer, wobei jede Layer Folgendes umfasst:
ein Statuskommunikationsobjekt, das Mittel zum Horchen auf Statusänderungsevents umfasst,
einen Statuscontainer, der Mittel zum Führen von Listen von Zustandsobjekten umfasst, die den Status der Konferenz definieren, und
ein Policy-Objekt, das Mittel zum Assistieren bei der Schöpfung und Zerstörung anderer Objekte in dem System umfasst.

13. Telekonferenzsystem nach Anspruch 12, wobei der Statuscontainer Mittel zum Assoziieren einer Sequenznummer mit jedem Zustand umfasst.

14. Telekonferenzverfahren zwischen Konferenzteilnehmern an einer Mehrzahl von fernen Konferenzteilnehmerorten durch ein Telekonferenzsystem, das eine Telekonferenzbrücke zum Handhaben von Kommunikationsleitungen und mit einer Brückendatenbank und einer Multi-site-Engine umfasst, wobei das Verfahren die folgenden Schritte umfasst:
Herstellen, mittels einer Agentkonsole, einer Schnittstelle mit der Brücke und der Brückendatenbank zum Planen von Konferenzen;
Kommunizieren, mittels der Multi-site-Engine, mit einer Multi-site-Engine eines fernen Telekonferenzsystems zum Übertragen von Steuersignalen in Echtzeit für einen gleichzeitigen Betrieb von wenigstens zwei Telekonferenzsystemen zum Handhaben einer einzelnen Konferenz;
Herstellen einer Verbindung, mittels der Brücke, mit einer Brücke eines ortsfernen Telekonferenzsystems für einen synchronen Betrieb der Brücken, so dass alle Telekonferenzsysteme als ein logisches System arbeiten.

15. Computerprogramm, das Computerprogrammcodes umfasst, die die Aufgabe haben, alle Schritte des Verfahrens von Anspruch 14 auszuführen, wenn das genannte Programm auf einem Computer abgearbeitet wird.

16. Computerprogramm nach Anspruch 15, das auf einem rechnerlesbaren Medium ausgestaltet ist.

## Revendications

1. Système de téléconférence comprenant :
un pont de téléconférence pour prendre en charge des lignes de communication pour au moins une conférence impliquant des conférenciers à une pluralité de sites distants de conférencier ;
une base de données de pont ;
une console d'agent pour l'interfaçage avec le pont et la base de données de pont afin d'ordonnancer des conférences, dans lequel
le système comprend en outre un moteur multi-sites pour la communication avec un moteur multi-sites d'un système de téléconférence distant en vue du transfert de signaux de commande en temps réel pour un fonctionnement simultané d'au moins deux systèmes de téléconférence afin de prendre en charge une même conférence ;
un moyen dans le pont pour établir une liaison avec un pont d'un système de téléconférence distant pour le fonctionnement des ponts en synchronisation de telle sorte que les systèmes de téléconférence fonctionnent comme un seul système logique.

2. Système de téléconférence selon la revendication 1, dans lequel le pont comprend un moyen pour établir la liaison comme une ligne de liaison dans un réseau vocal de télécommunications.

3. Système de téléconférence selon les revendications 1 ou 2, dans lequel le moteur multi-sites comprend un moyen pour communiquer avec le moteur multi-sites distant au moyen d'un protocole paquet.

4. Système de téléconférence selon la revendication 3, dans lequel le protocole paquet est TCP/IP.

5. Système de téléconférence selon l'une quelconque des revendications précédentes, comprenant en outre un moteur local associé au pont et résidant entre le pont et le moteur multi-sites.

6. Système de téléconférence selon la revendication 5, dans lequel le système comprend une pluralité de ponts, et un moteur local associé à chaque pont.

7. Système de téléconférence selon l'une quelconque des revendications précédentes, dans lequel le moteur multi-sites comprend un moyen pour transmettre des signaux de commande d'une façon déclenchée par événement asynchrone et pour recevoir de tels signaux de commande depuis un moteur multi-sites distant.

8. Système de téléconférence selon la revendication 7, dans lequel le système comprend un moyen pour catégoriser chaque événement par un type d'événement, et le moteur multi-sites comprend un moyen pour mettre à jour un fichier de configuration et pour décider du routage ultérieur d'un signal jusqu'au moteur local en fonction du type d'événement du signal de commande.

9. Système de téléconférence selon l'une quelconque des revendications précédentes, dans lequel le moteur multi-sites comprend un moyen pour interroger un moteur multi-sites d'un système distant si une période de temps s'écoule sans événement asynchrone.

10. Système de téléconférence selon l'une quelconque des revendications précédentes, dans lequel la console d'agent comprend un moyen pour écrire un drapeau global dans une base de données de pont afin d'indiquer l'ordonnancement d'une conférence multi-sites, et le système comprend une fonction d'état de pont comprenant un moyen pour transmettre automatiquement un signal de commande à un moteur multi-sites d'un système distant demandant l'établissement d'une ligne de liaison entre des ponts des systèmes.

11. Système de téléconférence selon la revendication 10, dans lequel chaque base de données comprend un moyen pour lancer des événements avant et après une conférence pour la synchronisation avec une base de données de pont d'un système distant participant à une conférence.

12. Système de téléconférence selon la revendication 11, comprenant une couche de moteur local, une couche de moteur multi-sites et une couche de pont, chaque couche comprenant :
un objet de communication d'état comprenant un moyen pour écouter des événements de changement d'état,
un conteneur d'état comprenant un moyen pour tenir à jour des listes d'objets d'état définissant un état de la conférence, et
un objet de règles comprenant un moyen pour aider à la création et à la destruction d'autres objets dans le système.

13. Système de téléconférence selon la revendication 12, dans lequel le conteneur d'état comprend un moyen pour associer un numéro de séquence à chaque état.

14. Procédé de téléconférence entre des conférenciers à une pluralité de sites distants de conférencier par le biais d'un système de téléconférence comprenant un pont de téléconférence pour prendre en charge des lignes de communication et comportant une base de données de pont et un moteur multi-sites, le procédé comprenant les étapes
d'interfaçage d'une console d'agent avec le pont et la base de données de pont afin d'ordonnancer des conférences ;
de communication du moteur multi-sites avec un moteur multi-sites d'un système de téléconférence distant afin de transférer des signaux de commande en temps réel pour un fonctionnement simultané d'au moins deux systèmes de téléconférence afin de prendre en charge une même conférence ;
d'établissement par le pont d'une liaison avec un pont d'un système de téléconférence distant pour le fonctionnement des ponts en synchronisation de telle sorte que les systèmes de téléconférence fonctionnent comme un seul système logique.

15. Programme informatique comprenant un moyen de code de programme informatique adapté pour exécuter toutes les étapes du procédé de la revendication 14 quand ledit programme est exécuté sur un ordinateur.

16. Programme informatique selon la revendication 15, mis en oeuvre sur un support lisible par ordinateur.
